# EUROPÄISCHE PATENTSCHRIFT

(11) **EP 1 623 541 B1**
(45) Veröffentlichungstag und Bekanntmachung des Hinweises auf die Patenterteilung: **06.09.2006**
(21) Anmeldenummer: 04741561.7
(22) Anmeldetag: 13.05.2004
(51) Int. Cl.: H04L 12/56

(54) **VERFHAREN UND NETZKNOTEN FUER EINE SELBST-REGULIERENDE, AUTONOME UND DEZENTRALE VERKEHRSVERTEILUNG IN EINEM MEHRWEGE-NETZ**
METHOD AND NETWORK NODE FOR SELF-REGULATING, AUTONOMOUS, AND DECENTRALIZED TRAFFIC DISTRIBUTION IN A MULTIPATH NETWORK
PROCEDE ET NOEUDS DE RESEAU POUR UNE DISTRIBUTION DU TRAFIC AUTOREGULEE, AUTONOME ET DECENTRALISEE DANS UN RESEAU MULTIVOIE

(30) Priorität: 15.05.2003 DE 10321953
(43) Veröffentlichungstag der Anmeldung: 08.02.2006
(73) Patentinhaber: SIEMENS AKTIENGESELLSCHAFT, 80333 München (DE)
(72) Erfinder: GRUBER, Claus, 80336 München (DE); SCHWABE, Thomas, 81549 München (DE); BUTENWEG, Stefan, 81247 München (DE)
(86) Internationale Anmeldenummer: PCT/EP2004/050782
(87) Internationale Veröffentlichungsnummer: WO 2004/102898

(56) Entgegenhaltungen:
- EP-A- 1 035 751
- EP-A- 1 087 576
- EP-A- 1 261 178

## Beschreibung

Die Erfindung betrifft ein Verfahren zur Verkehrslastumverteilung als Reaktion auf eine Verkehrsüberlast oder einen Linkausfall und einen Knoten für ein paketbasiertes Netz mit Mehrwegeverteilung.

Die derzeit möglicherweise wichtigste Entwicklung auf dem Gebiet der Netze ist die Entwicklung neuer Technologien, um paketorientierte Datennetze und dabei vor allem das Internet für neue Dienste geeignet zu machen. Diese neuen Dienste betreffen vor allem sogenannten Echtzeitverkehr, wie z.B. Sprachdaten und Videodaten.

Der Erfolg des Internets als meistbenutztes Medium zum Versenden bzw. Übertragen von Daten beruht zum großen Teil auf seiner Flexibilität. Mittels der IP (Internet Protocol) Technologie wird ein sogenanntes destination based routing, d.h. eine zielbezogene Paketvermittlung durchgeführt. IP-Pakete beinhalten eine Ursprungs- und eine Zieladresse, anhand derer lokal Routingentscheidungen getroffen werden. Man spricht in diesem Zusammenhang auch von einem Routing auf einer per Hop-Basis, d.h. Router leiten nach Maßgabe der im Datenpaket angegebenen Zieladresse zu einem nächsten Knoten (next Hop) weiter. Die herkömmliche IP-Technologie hat den wichtigen Vorteil, dass keine Zustände im Netz gehalten werden müssen, und dass keine vorhergehende Wegefestlegung für die Übertragung von Datenpaketen vorgenommen werden muss. Dafür muss man den Nachteil in Kauf nehmen, dass die Vermittlung der Pakete nur auf einer "best-effort"-Basis erfolgen kann, d.h. dass keine Garantie hinsichtlich der Dienstgüte übernommen wird.

Das zur Zeit am meisten verbreitete Routingprotokoll einer unabhängigen Netzdomäne (auch Autonomes System genannt) ist das sogenannte OSPF (Open Shortest Path First) Protokoll, welches einen verteilten Routingansatz verwendet. Die Topologie des Netzes ist dabei jedem Knoten bekannt und wird durch sogenannte Link-State-Advertisement Nachrichten an alle Knoten des Netzes verteilt. Basierend auf Link-Metriken wird in jedem Knoten selbständig für alle ihm bekannten Ziele je ein kürzester Pfad berechnet. Der Ausfall eines Links führt zu einer Neuberechnung der Pfade.

Zur Verbesserung der Dienstgüte von IP-Netzen im Hinblick auf neue Dienste mit Dienstgüteanforderungen werden zwei wichtige Ansätze verfolgt. Ein Ansatz sieht vor, zwischen einer Quelle und einer Senke bzw. einem Ursprung und einem Ziel mehr als einen Weg zu installieren, um so durch die Verteilung über verschiedene Wege auf Engpass-Situation bzw. Störsituationen reagieren zu können. Das Routing-Protokoll OSPF wurde in diesem Sinne durch Einführung des Equal Cost Multipath (ECMP) Konzepts erweitert, das eine gleichzeitige Verwendung von mehreren, im Sinne einer Metrik gleich langen Pfaden, zwischen einer Quelle und einer Senke ermöglicht. Das Verfahren erlaubt es, den Verkehr auf Pfade gleicher Länge zu verteilen. Eine Erweiterung dieses Konzeptes ist darin zu sehen, mit Hilfe von Traffic Engineering Mechanismen, d.h. mit Mechanismen zur Kontrolle und Steuerung des Paketverkehrs, anhand gemessener oder berechneter Netzbeanspruchungen die Linkauslastungen zu optimieren. Das sogenannte OSPF-TE (TE: Traffic Engineering) Verfahren versucht durch Anpassung der im Netz verteilten Link-Metriken abhängig von der Auslastung der jeweiligen Links eine gleichmäßige Verteilung des Verkehrs im Netz zu ermöglichen. Die Ansätze für ein Mehrwegerouting verfolgen typischerweise eine zentrale Lastverteilungsberechnung, d.h. es wird an zentraler Stelle bzw. von einer zentralen Instanz entschieden, wie die Verteilung der Pakete vorzunehmen ist.

Der zweite Ansatz ist die zentrale Festlegung von Pfaden durch das Netz einhergehend mit einer festen Reservierung der benötigten Bandbreite. Das wichtigste Konzept, welches mit dem Schalten von Pfaden arbeitet, ist das sogenannte Multi-Protocol Label Switching (MPLS) Protokoll bzw. Konzept. Im Rahmen dieses Konzeptes werden virtuelle Pfade durch das Netz definiert. Am Eingangsrouter einer MPLS-Domäne werden ankommende Pakete virtuellen Pfaden zugeteilt. Die geeignete globale Wahl der Pfade sowie der Zuordnung von Paketen zu den Pfaden ermöglicht eine gleichmäßige Verteilung im Netz.

Derzeitige Ansätze zur Verbesserung der Übertragungsqualität von herkömmlichen Datennetzen machen die Vorteile herkömmlicher Datennetze, nämlich ihre Flexibilität und geringe Komplexität zumindest teilweise wieder zunichte.

Die Patentschrift EP-A-1 087 576 offenbart ein Verfahren zur Verkehrslastumverteilung, derart, dass bei Überschreiten einer Obergrenze des Verkehrsaufkommens eine Verkehrsumverteilung automatisch vorgenommen wird. Die Patentschrift EP-A-1 035 751 offenbart ein Routingverfahren, welches Echtzeitanforderungen bedingt erfüllen kann.

Die Erfindung hat zur Aufgabe, ein Verfahren für Mehrwegerouting anzugeben, bei der die Verkehrsverteilung bzw. Lastverteilung unter Vermeidung der Nachteile herkömmlicher Verfahren optimiert wird.

Die Aufgabe wird durch die Ansprüche 1 und 9 gelöst.

Das Verfahren geht von einem paketbasiert arbeitenden Netz aus, in dem Mehrwegerouting bzw. die Verteilung von Paketen auf verschiedene Wege vorgesehen ist. Das Netz ist mit Knoten und Links (auch Kanten oder Verbindungsabschnitte genannt) gebildet. Zumindest für einen Teil der Knoten besteht die Möglichkeit, ankommende Pakete auf mehreren verschiedenen Wegen zu ihrem Ziel zu senden. Für die verschiedenen Alternativen bzw. verschiedenen Optionen für einen Knoten, ein Datenpaket abhängig vom Ziel des Datenpakets auf einen nächsten Link weiterzuleiten, wird im Folgenden der Begriff Wegefächer oder Verteilungsfächer verwendet. Der Wegefächer für einen Knoten bezüglich eines Ziels besteht aus dem von dem Knoten abgehenden Links, über welche Pakete zu dem Ziel geroutet werden können. Die Wege zum Ziel haben dabei nicht notwendi gerweise im Sinne einer Metrik gleiche Länge. Ein Ziel ist üblicherweise gegeben durch das in einer Routingtabelle festgehaltene Routingkriterium der einzelnen Knoten. Dieses ist nicht notwendigerweise identisch mit der üblicherweise im Paket angegebenen Zieladresse, sondern kann z.B. aus einem Teil der Zieladresse bestehen. Bei IP-Netzen orientieren sich die Knoten bzw. Router in der Regel an dem Teil der Adresse, die das Netz bezeichnet, in welchem der IP-Netz-Endpunkt (z.B. Host Gateway) liegt, der der vollständigen Zieladresse des Paketes entspricht.

Erfindungsgemäß nehmen Knoten des Netzes selbständig bzw. autonom eine Verteilung der Pakete bzw. Lastverteilung auf die Links eines Wegefächers vor. Die Änderung dieser Lastverteilung erfolgt auch autonom durch die Knoten. Ein Knoten überwacht die von ihm auf einen Link weitergeleitete Verkehrslast, bzw. Rate an Paketen. Wenn nun eine Überlast bei einem Link auftritt, wird diese von dem Knoten detektiert und daraufhin eine Überlastabwehrmaßnahme eingeleitet. Die primäre Überlastabwehrmaßnahme besteht darin, Verkehr von dem überlasteten Link auf andere Links des zugehörigen Fächers umzuverteilen. Entsprechend kann eine Reaktion auf einen Linkausfall durch Umverteilung auf nicht ausgefallene Links des zugehörigen Wegefächers vorgesehen werden.

Die Erfindung hat den Vorteil, dass von dem Knoten autonom eine Überlastabwehrreaktion vorgenommen wird, d.h. lokal eine Umverteilung stattfindet. Es ist keine komplexe Signalisierung oder Propagation von Nachrichten durch das ganze Netz von Nöten, die die Komplexität des Routingprotokolls sehr erhöhen würde. Weiter ist keine zentrale Instanz, weder zur Kontrolle, noch zur Festsetzung von Gewichten bei einer eventuellen Neuberechnung von Gewichten von Nöten. Stattdessen wird eine Neufestsetzung von Gewichten für das Routing entlang eines Fächers von den jeweiligen Knoten vorgenommen. Eine zentrale Steuerinstanz ist bgzl. Eventuellen Störungen der Instanz ein Schwachpunkt, der in der vorliegenden Erfindung vermieden wird.

Die erfindungsgemäße Umverteilung bzw. Aufteilung des Verkehrs auf verschiedene Wege kann in dem Sinne stufenlos erfolgen, als dass beliebige Aufteilungsverhältnisse von Paketen auf Links eines Wegefächers möglich sind. Das kontrastiert zu diversen aktuellen Verfahren für Multipath-Routing (wie z.B. ECMP), welche ein festes Aufteilungsverhältnis vorschreiben. Die Ermittlung von optimalen Aufteilungsverhältnissen kann beispielsweise mittels der Verkehrsmatrix, d.h. der gemessenen oder berechneten Verkehrsbelastungen der Links, erfolgen. Alternativ ist es möglich, durch einen Regelprozess die Aufteilungsverhältnisse zu optimieren. Dabei werden die veränderten Linkbelastungen bei einer Verkehrsumverteilung zu den Verkehrsumverteilungsmaßnahmen in Relation gesetzt und so die Verteilungsmaßnahmen für eine Vermeidung von Überlastsituationen ermittelt.

Entsprechend einer Weiterbildung wird eine Lastumverteilung durch die einzelnen Knoten oder durch einen einzelnen Knoten schrittweise vorgenommen. Dabei werden nach Abschluss eines Schrittes während eine Wartezeit oder eine Zeitspanne keine weiteren Verkehrsumverteilungsmaßnahmen durchgeführt. Nach Ablauf der Zeitspanne wird ein evtl. notwendiger nächste Schritt der Lastumverteilung begonnen. Dadurch haben die nachfolgenden Knoten eines eine Abwehrmaßnahme einleitenden Knoten die Möglichkeit, eine eventuell durch die Umverteilung an ihnen entstandene Überlast aufzulösen und ihrerseits wiederum den Verkehr umzuverteilen. Zudem kann durch eine schrittweise Lastanpassung einem Schwingen des Systems entgegengewirkt werden.

Der Erfindungsgegenstand kann für Situationen weitergebildet werden, bei denen durch Umverteilung innerhalb eines Fächers keine Auflösung der Überlast realisiert werden kann bzw. bei Ausfall eines Links die Datenpakete nicht auf die anderen Links des zugehörigen Wegefächers verteilt werden können, ohne auf einen dieser Links eine Überlast zu generieren. Dazu sendet ein überlasteter Knoten zumindest an einen ihm vorgelagerten Knoten eine Nachricht, mit der er diesen Knoten veranlasst, seinerseits wieder eine Umverteilung in dem Sinne vorzunehmen, dass zu dem betroffenen Knoten weniger Datenpakete übertragen werden. Vorgelagert bezieht sich dabei auf die Wege der auf den durch die Überlast bzw. den Linkausfall betroffenen Verteilungsfächer verteilten Pakete. Dieses Verfahren lässt sich rekursiv bzw. kaskadenartig auf die vor dem betroffenen Knoten vorgelagerten Knoten ausdehnen, so dass jeder Knoten, der eine Nachricht zur Anforderung einer Umverteilung erhält, dieser aber nicht durch Umverteilung innerhalb des Fächers bzw. von Fächern realisieren kann, seinerseits wieder Nachrichten an ihm vorgelagerte Knoten sendet, so dass diese ihrerseits wieder den Verkehr durch Umverteilung verringern. Dabei ist sinnvoll, wenn in einer Nachricht zur Veranlassung einer Umverteilung eine Information über die benötigte Verkehrslastverringerung, d.h. z.B. ihrer Art und ihrem Umfang enthalten ist. Dieses Verfahren führt in der Regel auf Grenzen, wenn ein Randknoten des Netzes eine Nachricht zur Überlastverringerung erhält. Denn Randknoten können in der Regel nicht mittels des innerhalb des Netzes verwendenden Protokolls zur Nachrichtenübermittlung mit Knoten eines anderen Netzes kommunizieren. Ein solcher Randknoten kann zur Verringerung des von ihm abgehenden Verkehrs, den im Rahmen einer Netzzugangskontrolle von ihm in das Netz gelassenen Verkehr verringern, um so die benötigte Verkehrslastreduzierung zu bewirken. Zugangskontrollen werden häufig in Datennetzen eingesetzt, die eine Übertragung unter Einhaltung von Dienstgütemerkmalen gewährleisten sollen.

Der Erfindungsgegenstand beinhaltet auch einen Netzknoten bzw. Router, der mittels einer Verkehrsüberlast und zum Umverteilen von Verkehr auf andere, von Knoten abgehende Links, ausgestattet ist. Ein solcher Knoten kann auch zusätzlich mit Mitteln zum Senden von Nachrichten versehen sein, wobei diese Nachrichten bei vorgelagerten Knoten eine Umverteilung des Verkehrs bewirken können. Diese Mittel beinhalten beispielsweise Softwaremodule, die das dem Senden der nachrichten zugrunde liegende Protokoll unterstützen.

Der Erfindungsgegenstand wird im Folgenden anhand von zwei Figuren im Rahmen eines Ausführungsbeispiels näher erläutert.

### Es zeigen:

Fig.1: Ein Netzausschnitt mit Knoten und Links.

Fig.2: Eine zugehörige Tabelle mit Angaben über den im Netzausschnitt gezeigten Knoten zugeordneten Verteilungsfächer.

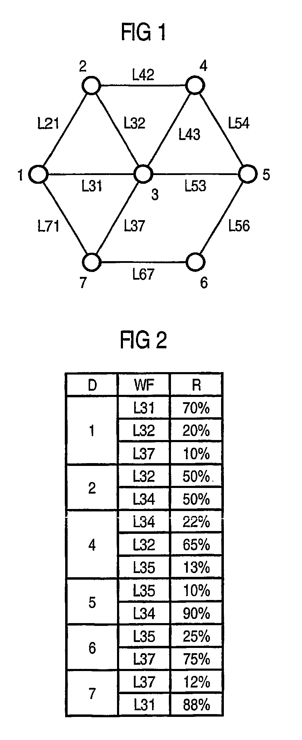

In der Figur 1 sind Knoten 1 bis 6 und Links (Verbindungen zwischen den Knoten) LIJ, I,J aus {1,2,3,4,5,6,7} dargestellt. Dabei ist einem Link eine Richtung zugeordnet. Z.B. führt der Link L31 vom Knoten 3 zum Knoten 1. Der Gesamtverkehr auf dem zugehörigen physikalischen Link zwischen den Knoten 3 und 1 setzt sich dann zusammen aus dem Verkehr des Links L31 und des Links L13, falls vorgesehen ist, von dem Knoten 1 zum Knoten 3 Pakete zu senden. In der Figur sind der Einfachheit halber nur Links mit einer Richtung gezeigt. Figur 2 zeigt eine Tabelle mit verschiedenen vom Knoten 3 abgehenden Wegefächern. Die erste Spalte D (D: für destination) gibt das Ziel bzw. die Senke von von Knoten 3 weitergeleiteten Paketen an. Vereinfachend ist dabei angenommen, dass jeder der anderen dargestellten Knoten als Ziel für die Versendung von Paketen in Frage kommt. Die zweite Spalte gibt die Wegefächer WF zu den jeweiligen Zielen an. Z.B. ist zu dem Ziel, das durch den Knoten 1 gegeben ist, ist ein Fächer definiert, der aus drei Links besteht, wobei einer direkt zu dem Knoten 1 führt und die anderen beiden jeweils über den Knoten 2 bzw. 7. Das Verteilungsverhältnis R (R: für Ratio) bzw. die Lastverteilung auf diesen Verteilungsfächer bzw. Wegefächer ist in der dritten Spalte der Tabelle angegeben. So werden 70 % des Verkehrs direkt zu Knoten 1 geleitet, während die anderen 30 % über den Knoten 2 bzw. den Knoten 7 zu ihrem Ziel, dem Knoten 1 gesendet werden. Analog sind die Verteilungsfächer zu den Knoten 2, 4, 5, 6 und 7 angegeben. Das Verteilungsverhältnis wurde entsprechend der Prioritäten der Wege festgesetzt, direkte Verbindungen haben ein höheres Verteilungsgewicht. Wenn nun der Link L31 zwischen Knoten 3 und Knoten 1 ausfällt, kann erfindungsgemäß der Knoten 3 den Verkehr zum Knoten 1 über die Knoten 2 und 7 verteilen, indem er die Verteilungsgewichte entsprechend ändert. Da der Großteil des Verkehrs über den Link L13 zwischen Knoten 1 und Knoten 3 gesendet wurde, kann durch die Umverteilung eine Überlast auf den Links L37 zwischen Knoten 3 und Knoten 7 und L32 zwischen Knoten 3 und Knoten 2 bewirkt werden. Um diese Überlast zu reduzieren, sendet der Knoten 3 eine Nachricht an den Knoten 4 und den Knoten 5, um den zu ihm geleiteten Verkehr zu verringern. Auf Erhalt dieser Nachricht ändern die Knoten 4 und 5 ihre Verkehrsverteilung für Pakete zu dem Ziel, das durch den Knoten 1 gegeben ist. Beispielsweise routet Knoten 5 einen größeren Anteil des Verkehrs zu Knoten 1 über die Knoten 6 und 7, anstatt über den Knoten 3. Und der Knoten 4 erhöht den Anteil des Verkehrs, der über den Knoten 2 zu dem Knoten 1 geleitet wird. Auf diese Weise wird eine Lastverringerung auf den Links L37 und L32 zwischen den Knoten 3 und 7 und 3 und 2 dadurch erreicht, dass vorgelagerte Knoten, nämlich 5 und 4 mehr Verkehr über die Links L54, L42 und L21 sowie L56, L67 und L71 leiten. In realen Netzen mit sehr viel mehr Knoten hätte in der Regel Knoten 5 einen ihm vorgelagerten Knoten, dem er wieder eine Nachricht senden könnte, wenn die durch ihn getroffene Maßnahme nicht zur notwendigen Reduktion des Verkehrsaufkommen führen würde.

## Patentansprüche

1. Verfahren zur Verkehrslastumverteilung als Reaktion auf eine Verkehrsüberlast oder einen Linkausfall in einem mit Knoten (1, 2, 3, 4, 5, 6, 7) und Links (L31, L32, L37, L71, L21, L42, L43, L67, L53, L54, L56) gebildeten paketbasierten Netz mit Mehrwegeverteilung von Paketen, wobei zumindest für einen Teil der Knoten Pakete mit demselben Ziel auf wenigstens zwei Links, die einem dem Ziel zugeordneten Wegefächer (L31, L32, L37) zugehören, verteilbar sind,
demzufolge
- durch einen Knoten (3) das Überschreiten einer Obergrenze durch die Verkehrslast auf einem von ihm abgehenden Link (L31) oder der Ausfall eines von ihm abgehenden Link (L31) festgestellt wird,
- durch den Knoten (3) unabhängig von externen Steuerinstanzen eine Verkehrslastumverteilung vorgenommen wird, indem zumindest ein Teil der Pakete, welche bei unveränderter Lastverteilung über den abgehenden Link (L31) gelenkt würden, auf eine oder mehrere andere vom Knoten (3) abgehende Links (L32, L37) gelenkt werden, welche dem selben Wegefächer (L31, L32, L37) zugeordnet sind, und **dadurch gekennzeichnet, dass**
- wenn durch die Verkehrslastumverteilung nicht erreicht wird, dass die Verkehrslast die Obergrenze unterschreitet ohne ein Überschreiten einer anderen Obergrenze auf einem von dem Knoten abgehenden Link zu bewirken, eine Nachricht an einen bzgl. über den Wegefächer (L31, L32, L37) verteilte Pakete vorgelagerten Knoten (4,5) gesendet wird, durch die eine Verkehrslastumverteilung dieses vorgelagerten Knotens (4,5) zur Verringerung der durch die an den Knoten (3) gesendeten und über den Wegefächer (L31, L32, L37) verteilten Verkehrslast bewirkt wird.

2. Verfahren nach Anspruch 1,
**dadurch gekennzeichnet, dass**
- die Verkehrslastumverteilung schrittweise betreffs Anteile der Überlast vorgenommen wird, und
- nach Abschluss eines Schrittes eine Zeitspanne bis zur Einleitung des nächsten Schrittes gewartet wird.

3. Verfahren nach Anspruch 1 oder 2,
**dadurch gekennzeichnet, dass**
- eine Nachricht an bzgl. der über den Wegefächer (L31, L32, L37) verteilte Pakete unmittelbar vorgelagerten Knoten (4,5) zwecks Verkehrslastumverteilung dieser vorgelagerten Knoten zur Verringerung der durch die an den gesendeten und über den Wegefächer (L31, L32, L37) verteilten Verkehrslast gesendet wird.

4. Verfahren nach einem der vorhergehenden Ansprüche,
**dadurch gekennzeichnet, dass**
- die Nachricht eine Information über die benötigte Verkehrslastverringerung enthält.

5. Verfahren nach einem der Ansprüche 4,
**dadurch gekennzeichnet, dass**
- ein benachrichtigter vorgelagerter Knoten (4,5), der nicht durch Verkehrslastumverteilung die benötigte Verkehrslastverringerung für den betroffenen Knoten erzielen kann, ohne ein weiteres Überschreiten einer Obergrenze für eine Verkehrslast zu verursachen, seinerseits eine Nachricht an einen ihm vorgelagerten Knoten schickt, wodurch dieser veranlasst wird, durch Verkehrsumverteilung bzw. das Senden von Nachrichten an vorgelagerte Knoten die benötigte Verkehrslastreduzierung vorzunehmen.

6. Verfahren nach Anspruch 5,
**dadurch gekennzeichnet, dass**
- vorgelagerte Knoten, welche eine Nachricht von dem betroffenen Knoten (3) oder von einem vorgelagerter Knoten (4,5) erhalten, entweder durch Verkehrslastumverteilung die entsprechend der erhaltenen Nachricht benötigte Verkehrslastreduzierung realisieren oder an zumindest eine Nachricht an einen vorgelagerten Knoten zur Verkehrslastreduzierung senden.

7. Verfahren nach einem der vorhergehenden Ansprüche,
**dadurch gekennzeichnet, dass**
- ein Randknoten, der eine Nachricht zur Verkehrslastreduzierung eines vorgelagerten Knotens erhält, durch Verringerung der Grenzen für eine Zugangskontrolle zum Netz die benötigte Verkehrslastreduzierung bewirkt.

8. Knoten (3) für ein paketbasiertes Netz mit Mehrwegeverteilung, mit
- Mitteln zur Erkennung einer Verkehrsüberlast auf einem von ihm abgehenden Link,
- Mitteln zur Umverteilung von Verkehr auf andere von dem Knoten (3) abgehende und zum selben Verteilungsfächer gehörige Links, und **gekennzeichnet durch**
- Mittel zum Senden von Nachrichten an einen im Bezug auf über den Verteilungsfächer (L31, L32, L37) gesendete Pakete vorgelagerten Knoten (4,5) zur Anforderung einer Verkehrsreduzierung des von dem vorgelagerten Knoten (4,5) übertragenen Verkehrs, wobei das Senden der Nachrichten erfolgt, wenn durch die Verkehrslastumverteilung nicht erreicht wird, dass die Verkehrslast die Obergrenze unterschreitet ohne ein Überschreiten einer anderen Obergrenze auf einem von dem Knoten abgehenden Link zu bewirken, und das Senden der Nachricht eine Verkehrslastumverteilung dieses vorgelagerten Knotens (4,5) zur Verringerung der **durch** die an den Knoten (3) gesendeten und über den Wegefächer (L31, L32, L37) verteilten Verkehrslast bewirkt.

## Claims

1. Method for redistributing traffic in response to a traffic overload or link failure in a packet-based network made up of nodes (1, 2, 3, 4, 5, 6, 7) and links (L31, L32, L37, L71, L21, L42, L43, L67, L53, L54, L56) with multipath distribution of packets, with packets with the same destination being able to be distributed to at least two links, which are associated with an array of paths (L31, L32, L37) assigned to the destination, at least for some of the nodes,
according to which
- a node (3) determines when the traffic load on a link (L31) going away from it exceeds an upper limit or a link (L31) going away from it fails,
- the node (3) redistributes the traffic load independently of external control entities, by routing at least some of the packets, which would have been routed via the outward link (L31) had the load distribution not been changed, to one or more other links (L32, L37) going away from the node (3), which are assigned to the same array of paths (L31, L32. L37), and **characterised in that**
- if the traffic load does not drop below the upper limit as a result of the traffic redistribution without a different upper limit being exceeded on a link going away from the node, a message is sent to a node (4, 5) that is upstream in respect of packets distributed via the arrays of paths (L31, L32, L37), which causes a traffic load redistribution at this upstream node (4, 5) to reduce the traffic load sent by the [lacuna] to the node (3) and distributed via the arrays of paths (L31, L32, L37).

2. Method according to claim 1,
**characterised in that**
- the traffic load redistribution is carried out in stages in respect of proportions of the overload and
- at the end of a stage there is a waiting period of a time interval before the next stage is initiated.

3. Method according to claim 1 or 2,
**characterised in that**
- a message is sent to all nodes (4, 5) directly upstream in respect of packets distributed via the arrays of paths (L31, L32, L37) for the purpose of traffic redistribution at these upstream nodes to reduce the traffic load sent by the [lacuna] to the [lacuna] and distributed via the arrays of paths (L31, L32, L37).

4. Method according to one of the preceding claims,
**characterised in that**
- the message contains information about the required traffic load reduction.

5. Method according to one of claims 4,
**characterised in that**
- a notified upstream node (4, 5), which cannot achieve the required traffic load reduction for the node in question by means of traffic load redistribution without causing a further upper limit for a traffic load to be exceeded, for its part sends a message to a node upstream from it, prompting said node to carry out the required traffic load reduction by traffic redistribution or by sending messages to upstream nodes.

6. Method according to claim 5,
**characterised in that**
- upstream nodes, which receive a message from the node in question (3) or from an upstream node (4, 5) either carry out the traffic load reduction required according to the message received by traffic load redistribution or send at least one message to an upstream node to reduce the traffic load.

7. Method according to one of the preceding claims,
**characterised in that**
- an edge node, which receives a message to reduce the traffic load at an upstream node, brings about the required traffic load reduction by reducing the limits for controlling access to the network.

8. Node (3) for a packet-based network with multipath distribution, with
- means for identifying a traffic overload on a link going away from it and
- means for redistributing traffic to other links going away from the node (3) and associated with the same distribution array, and **characterised by**
- means for sending messages to a node (4, 5) that is upstream in respect of packets sent via the distribution arrays (L31, L32, L37) to request a traffic reduction in the traffic transmitted from the upstream node (4, 5), with the messages being sent, if the traffic load does not drop below the upper limit as a result of the traffic redistribution without a different upper limit being exceeded on a link going away from the node, and the sending of the message causing a traffic load redistribution at this upstream node (4, 5) to reduce the traffic load sent by the [lacuna] to the node (3) and distributed via the arrays of paths (L31, L32, L37).

## Revendications

1. Procédé de redistribution de charge de trafic en tant que réaction à une surcharge de trafic ou à une défaillance de lien dans un réseau orienté paquets, formé avec des noeuds (1, 2, 3, 4, 5, 6, 7) et des liens (L31, L32, L37, L71, L21, L42, L43, L67, L53, L56), avec distribution multivoie de paquets, des paquets ayant la même destination étant distribuables, au moins pour une partie des noeuds, sur au moins deux liens qui appartiennent à un éventail de voies (L31, L32, L37) affecté à la destination,
selon lequel
- le dépassement d'une limite supérieure en raison de la charge de trafic sur un lien (L31) partant d'un noeud ou de la défaillance d'un lien (L31) partant du noeud est constaté par le noeud (3),
- une redistribution de la charge de trafic est exécutée par le noeud indépendamment d'instances de commande externes, du fait qu'au moins une partie des paquets, lesquels devraient être acheminés par le lien sortant (L31) si la distribution de charge était inchangée, sont acheminés sur un ou plusieurs autres liens (L32, L37) partant du noeud (3), lesquels sont attribués au même éventail de voies (L31, L32, L37), et
**caractérisé en ce que**
- lorsqu'on n'obtient pas par la redistribution de charge de trafic que la charge de trafic ne descende pas en dessous de la limite supérieure sans causer un dépassement d'une autre limite supérieure sur un lien partant du noeud, un message est émis à un noeud (4, 5) situé en amont, en ce qui concerne les paquets distribués via l'éventail de voies (L31, L32, L37), au moyen duquel message une redistribution de charge de trafic de ce noeud (4, 5) situé en amont est produite pour diminuer la charge de trafic émise au noeud (3) et distribuée via l'éventail de voies (L31, L32, L37).

2. Procédé selon la revendication 1,
**caractérisé en ce que**
- la redistribution de charge de trafic est exécutée par étapes en ce qui concerne des fractions de la surcharge, et
- **en ce qu'**après l'exécution d'une étape, on attend un laps de temps jusqu'à l'introduction de l'étape suivante.

3. Procédé selon la revendication 1 ou 2,
**caractérisé en ce qu'**
- un message est émis aux noeuds (4, 5) situés directement en amont en ce qui concerne les paquets distribués via l'éventail de voies (L31, L32, L37), dans le but de la redistribution de charge de trafic de ces noeuds situés en amont, pour réduire la charge de trafic émise par eux et distribuée via l'éventail de voies (L31, L32, L37).

4. Procédé selon l'une quelconque des revendications précédentes, **caractérisé en ce que**
- le message contient une information concernant la réduction nécessaire de charge de trafic.

5. Procédé selon la revendication 4,
**caractérisé en ce qu'**
- un noeud (4, 5) situé en amont et informé, qui ne peut pas obtenir la réduction nécessaire de charge de trafic pour le noeud concerné au moyen de la redistribution de charge de trafic sans causer un dépassement supplémentaire d'une limite supérieure pour une charge de trafic, émet de son côté un message à un noeud qui est situé en amont de lui, celui-ci étant incité par ceci d'exécuter la réduction de charge de trafic nécessaire par redistribution de trafic resp. par l'émission de messages à des noeuds situés en amont.

6. Procédé selon la revendication 5,
**caractérisé en ce que**
- des noeuds situés en amont, lesquels reçoivent un message du noeud concerné (3) ou d'un noeud (4, 5) situé en amont, soit réalisent, par la redistribution de charge de trafic, la réduction de charge de trafic nécessaire, correspondant au message reçu, soit émettent, pour la réduction de charge de trafic, un message à au moins un noeud (4, 5) situé en amont.

7. Procédé selon l'une quelconque des revendications précédentes,
**caractérisé en ce qu'**
- un noeud de bord, qui reçoit un message pour la réduction de charge de trafic d'un noeud situé en amont, produit la réduction de charge de trafic nécessaire en réduisant les limites pour un contrôle d'accès au réseau.

8. Noeud (3) pour un réseau orienté paquets, avec distribution multivoie, comprenant
- des moyens d'identification d'une surcharge de trafic sur un lien partant de lui,
- des moyens pour la redistribution du trafic sur d'autres liens partant du noeud (3) et appartenant au même éventail de voies, et **caractérisé par**
des moyens pour émettre des messages à un noeud (4, 5) situé en amont, en ce qui concerne des paquets émis via l'éventail de voies (L31, L32, L37) pour demander une réduction de trafic du trafic transmis par le noeud (4, 5) situé en amont, l'émission des messages ayant lieu lorsque l'on obtient pas, au moyen de la redistribution de la charge de trafic, que la charge de trafic descende en dessous de la limite supérieure sans causer un dépassement d'une autre limite supérieure sur un lien partant du noeud, et que l'émission du message cause une redistribution de la charge de trafic de ce noeud (4, 5) situé en amont pour la réduction de la charge de trafic émise au noeud (3) et distribuée via l'éventail de voies (L31, L32, L37).
